Europäisches Patentamt

European Patent Office

Office européen des brevets

(11) Publication number: **0 455 857 A1**

# EUROPEAN PATENT APPLICATION

(21) Application number: 90108857.5

(22) Date of filing: 11.05.90

(51) Int. Cl.⁵: **G01N 21/89**

(43) Date of publication of application:
**13.11.91 Bulletin 91/46**

(84) Designated Contracting States:
**BE DE FR GB NL SE**

(71) Applicant: **DIFFRACTO LIMITED**
**2835 Kew Drive**
**Windsor, Ontario N8T 3B7(CA)**

(72) Inventor: **Reynolds, Rodger**
**1425 Olive Road**
**Windsor, Ontario N8Y 4M3(CA)**
Inventor: **Clarke, Donald A.**
**973 Virginia Avenue**
**Windsor, Ontario N8Y 2Y5(CA)**
Inventor: **Pryor, Timothy R.**
**416 Old Tecumseh Road, RR 1,**
**Tecumseh, Ontario N8N 2L9(CA)**

(74) Representative: **Leine, Sigurd, Dipl.-Ing. et al**
**LEINE & KÖNIG Patentanwälte**
**Burckhardtstrasse 1**
**W-3000 Hannover 1(DE)**

(54) Improved methods and apparatus for retroreflective surface inspection and distortion measurement.

(57) A method of creating retroreflection surface images comprises illuminating the surface (350) with an extended light field from a source (either 340 or 370) and moving a group of retroreflective elements (300) through said light field so as to reilluminate the surface at a succession of locations (380). Camera (360) and illumination axis (371) may be moved in unison with the group of retroreflective elements (300).

Another method uses divergent light and a single retroreflector element.

The sensitivity may be controlled by selecting the angular distribution of retroreflected light by choosing the wavelength. System calibration is effected by varying the angular distribution under test conditions or by inserting and moving a test surface. Operators may be helped in recreating previous images by alternate display of test and reference images.

FIG. 3

This application relates to systems described in the European patent applications EP 85900918.5 "D-Sight", EP 86903720.0 "D-Sight Improvements" and EP 87903960.0 "I-Sight Improvements" and to the publication of Diffracto Limited "Optical Enhancement of Surface Contour Variations for Sheet Metal and Plastic Panel Inspection" of 05.07.1988. It is directed at improvements that we have found in the method of producing enhanced surface images using retroreflective surface illumination and in the utilization of these images for practical measurement of surfaces.

In the following discussions, the term "Retroreflection Surface Image" (also called a "D Sight™ image) is utilized to describe the image produced when a light source illuminates a surface, and light from the surface strikes a myriad of small retroreflective elements, which reflect the light back to the surface and thence on reflection again from the surface, back to an observation point (or plane).

The image produced discussed in the copending application "I Sight" is termed retroreflection index distortion image. A general term encompassing both types of images is "retroreflection image".

The principle inventions and improvements disclosed herein are:

1. The use of broad light sources (employing multiple elements or a single large element) to essentially flood the surface from different angles in order to eliminate certain disturbing effects.

2. The use of the same broadened light sources to enhance the apparent backlit image effect, thereby giving a correct position of the defect or distortion on the surface of the material.

3. The use of spatial optical modifiers to enhance sensitivity or for other purposes.

4. Selection or control of the retroreflector beamspread to modify or enhance the retroreflective surface image effect.

5. The use of sequential retroreflection, of particular use where infrared or other sources are used (where retroflector construction can be expensive).

6. Set up tools for test systems.

The invention is described in the following figures:

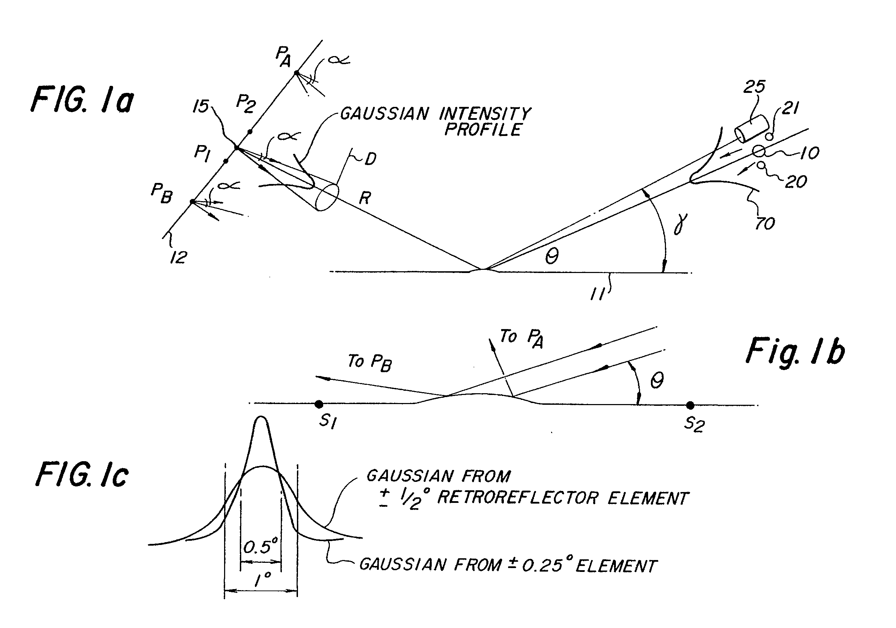

Figure 1 illustrates a basic embodiment of the invention, illustrating the effect of both "point" and broad light sources. The advantage offered by the broad light source 15 in more realisticaly providing an image of the distortion of the object and in more accurately delineating the actual location of the distortion on the surface is discussed.

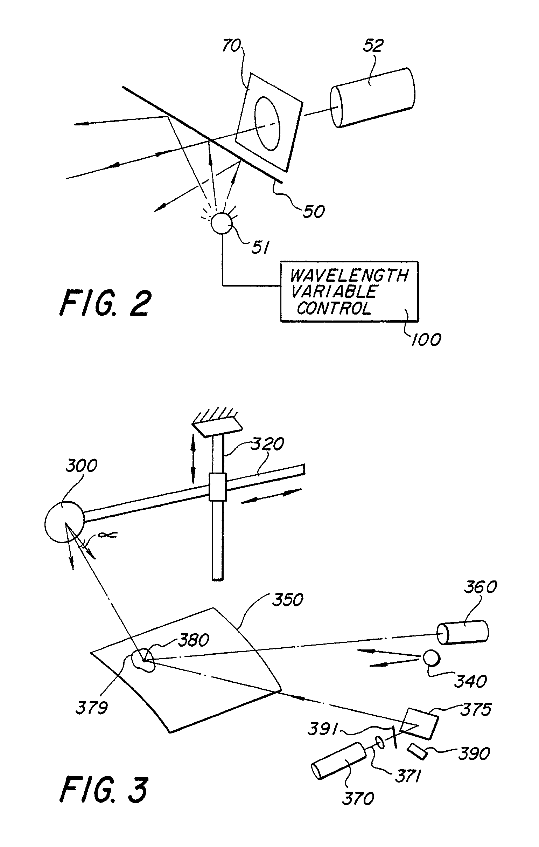

Figure 2 discusses further aspects of the operation of the invention and the effect of changing beamspread from various sizes of retroreflective elements.

Figure 3 illustrates an embodiment of the invention in which a retroreflective element grouping is moved through a light field illuminating a surface with the resultant retroreflective surface image accumulated by the camera or its memory (image summation optical or electronic).

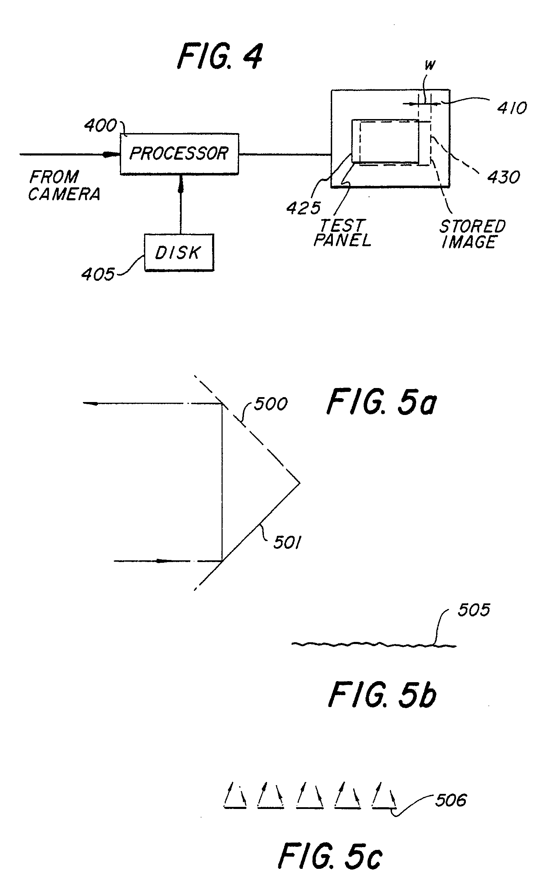

Figure 4 illustrates apparatus according to the invention in which a stored reference retroreflective surface image of the object to be inspected, is alternately displayed on a monitor to assist in the correct repositioning of the test part and the adjustment of the light source and camera focus, optical magnification, or light intensity relationships.

Incorporated by reference is a paper by Rodger Reynolds and Omer Hageniers, entitled "Optical Enhancement of Surface Contour Variations for Sheet Metal and Plastic Panel Inspection", presented at the SPIE International Symposium on Optical Engineering and Industrial Sensing for Advanced Manufacturing Technologies, Dearborn, Michigan, June 28, 1988.

FIGURE 1

Figure 1 illustrates creation of a retroreflection surface image and the generation of "primary" and "secondary" image signatures which are further described in the referenced paper by Reynolds and Hageniers.

Discussed here in more detail is the function of the three preferred types of light sources that have been found to date; point source, broad source, and a multiple collection of point sources effectively producing illumination of the surface from a plurality of angles like a broad source.

Consider the use of the "point" light source 10 which illuminates surface 11 with radiation which is reflected and then retroreflected by retroreflecting member (typically a screen) 12, containing a large number of small retroreflecting elements which are generally small relative to the extension of surface that is being measured (e.g. 50 micron diameter elements and surface areas 50mm or more). The light returning from these elements e.g. 15, hits the surface again and is directed toward the camera which images the surface using the light so returned. The camera, 25, is shown in the "off-axis" ($\gamma \neq \theta$) position. It can also be "on-axis" ($\gamma = \theta$).

When a small up-dent (bump, protrusion, etc.) for example is present, the light from the sloped protuding portion of the surface is directed to other points (e.g. $P_A$, $P_B$) of the retroreflective screen than would normally have been illuminated by light reflected from that portion of the surface, had the surface not been distorted. The light from this and all portions of the screen returns to the general region of the surface from whence it came, however covering an area generally larger than the up-dent, due to a typical divergence α of ± 1/2 degree of returned light from the screen. In some cases, there may be little or no returned light realizing that if the slope of the up-dent is sufficiently great (relative to the screen extension), light (e.g. proceeding to point P_A) can completely exit the system (i.e. not able to hit the screen at all or at a suitable angle for retroreflection).

Importantly, the light that hits the generally undistorted surface near and surrounding the particular defect (e.g. at points $S_1$ and $S_2$), goes on to hit the screen (e.g. at points $P_1$ and $P_2$ in Figure 1), and in turn spreads in angle and re-radiates the surface, including the defect bump (or other distortion), creating a backlight (front light) effect, when $\gamma > \theta$.

Given a typical experimental setup, the beam spread α of the retroelements is about ±1/2 degree (to gaussian half power points), using 50-75 micron beads from Scotchlight 7615 by 3M Company). For screen to surface distances "R" on the order of 1-2 meters, actual area of the surface re-radiated by each minute retroelement, is relatively large compared to some of the typical defects of interest. A dirt pimple on sheet metal for example may be only 1mm in diameter, whereas the diameter "D" on a zone on the surface reirradiated by each point on the screen is on the order of 50mm at R = 2 meters.

Light Source Size Effects

At this point it is of interest to consider what happens using a "point" source of light small in extension relative to the surface. If one is looking directly at the retroreflective screen through the panel surface and the optical system is focused on the screen, one can see the various light and dark patterns made on the screen due to the redistribution of light caused by the distortion on the first reflection from the surface. For example an up-ding on the surface, that is a protrusion from the surface, creates a relatively dark zone on the screen, i.e. the light level that gets to the screen at the location that it would have, with no defect present, is reduced relative to its surroundings.

Using Figure 1 as a reference, much of the light proceeds in the general direction of $P_A$ and $P_B$, with the dent functioning as a small convex mirror.

Conversely, an indentation into the surface at the same point on the surface, can produce on the screen, a concentration of light due to a "concave mirror" effect. The human visualizing the screen in reflection through the surface can see these light effects (which have, in the referenced technical paper, been called the "primary" signature of the distortion).

The primary signature of an up-ding for example, however appears to be shifted from the true location of the defect. It appears to lie farther from (or closer to) the observer depending on whether the light source is at a smaller (or larger) angle from the surface than the observer. The amount of displacement is proportional to the angular separation in the illumination and observation axes. For "off-axis" operation ($\gamma \neq \theta$), this makes it difficult to use the primary signature when one wants to determine a defect position on the surface (and say correct it using a grinder or whatever to grind off the area of defect, e.g. on a sheet metal panel).

Because of the pronounced bright/dark aspect of the primary image, the point source creates the sharpest contrast defect and makes the process of finding small defects of sharper slope easiest (at least where few other defects are present). However, if one wishes to have the true contour image with positive slopes bright and negative slopes dark say, then a point light source generally should not be used. The same holds true in "off-axis" mode where one wishes to know accurately where on the panel the defect indication is from.

When one expands the light source size using either a single broad light source as in a camera flash (or larger), or a matrix of single bulbs such as 10, 20 and 21, it can be seen that the angle of attack to each defect on the surface is different from each point of each of the multiple sources (or an "infinite" number of points on the broad source). This being the case, any "primary signatures" on the screen, can be essentially "washed out" by the light coming to the screen from other undistorted surface locations (illuminated by other portions of the light source(s)), and little or no real "primary" effect on the screen is seen in looking through the panel at the screen.

When one focuses (especially with a camera lens which easily maintains a focus unlike the human eye) onto the test surface and looks at it under such broad source illumination, then one generally sees the secondary effect only, which appears to be a "backlighting" (for $\gamma > \theta$) of the defect from the light that did not hit the defect or other distortion on the surface. In this case, uniquely true appearing contour type patterns are produced, even for relatively larger slope defects. Sensitivity is however reduced for smaller defects due to the bluring of reradiated light from the screen caused by the miltiple sources.

It should be noted that for a small slope defect where very little displacement occurs of the secondary and primary, one really sees only the secondary image anyway because the light power from it overwhelms that of the primary. Therefore, the main difference between the point source effect and the broad source is when the larger slopes are present (such as caused by an up-ding .001" high and .020" in diameter). This also explains why when used with highlight oils and other things having certain ripple of substantial slope are used that this ripple is much more "noisy" when viewed with the point source than with a broad source. Again the broad source is preferable in these instances.

In terms of size for use on surfaces 1 meter square, typically a broad source consists of a group of 10 point light bulbs within a 5 x 10 cm area, or a camera flash gun of extension 2 cm x 4 cm, where screen size is accordingly larger than the surface to intercept the reflected light therefrom. Smaller (larger) surfaces typically could use smaller (larger) broad sources and screens.

FIGURE 2

Let us consider the operation of the device through at least one theory. Again, light produced by a broad source 10, illuminates the surface area, around the defect, and light reflected therefrom, and rereflected by the retroreflector, reilluminates the defect and in essence provides the vast majority of the illumination of the defect which is observed by the camera. Light, on reflection once again by the surface, is directed to the camera, which in this example, is located on axis in a manner as shown (wherein beamsplitter 50 is used to direct light from the point source 51 along the camera axis 52).

Light from undistorted surface areas such as $S_1$ and $S_1$ farther and farther away from the defect, contribute less and less actual light intensity to the defect because the beam spread from each of the small retroreflectors such as 15, is dying off both due to the area covered, due to the gaussian beam distribution from the individual small retroreflecting elements, and due to the angular divergence away from the camera from the defect.

This re-illumination of every point on the surface (and its distortion if any) from multiple points on the screen, produces what is termed in the reference paper, the "secondary image".

When one produces an image of the surface under such illumination, the positive slopes (viewed from the screen) direct light to (away from) the camera if the camera is farther in angle than the light source from the surface, the negative slopes do the opposite, and clearly the undistorted panel just continues to send the light back toward the source (albeit spread in cone of angle $\alpha$ which results in a disc of light 70, of gaussian distribution approximately 20 - 40mm in diameter with the above experimental parameters. This disc is also related to Airy Diffraction Disc as it appears to be the far field diffraction pattern of the retroreflective elements. Most elements in any one screen are uniform in size, and in this case, diffraction rings are also observed.

Given the above, we may then consider the action of both on-axis and off-axis viewing. In the on-axis case, action of a protrusion defect is to shoot the light away from where it normally would have gone and the net effect is a darkening of the zone on the screen represented by the defect. The steeper the slope of the defect, the darker it appears.

In the off-axis case, the light from the defect directs (on reradiation by the multiple retroreflecting elements of the screen) either more or less light toward the camera depending on the slope of the defect, and whether it is positive or negative relative to the surrounding surface.

By mixing retroreflective element sizes and/or colors, one can soften the ring effect due to overlap of diffraction patterns. By changing sizes, wavelength or optical dispersion, one can change the sensitization of the technique.

For example, the increase in light by the camera due to positive slope of the defect, is proportional to the slope, and the power density which is in turn proportional to the gaussian beam spread, i.e. the angle $\alpha$. With larger element size or smaller wavelength, $\alpha$ will decrease and the sensitivity can typically increase with fixed diameter elements. A variable wavelength light source such as 51, controlled by light wavelength variable control 100 (e.g. a prism) can be used to change sensitivity and to calibrate by using test surface samples of known surface slopes and observing the effects on wavelength needed to match the readings say. These arguments also hold for index of refraction gradients in the copending "I Sight" case.

As another example, retroreflective sheet comprised of corner cubes 0.1mm in diameter were substituted for the typical .075mm glass bead type screen (Scotchlight 7615). The gaussian disc at the observation location dropped from 10cm in diameter to approximately 7.5cm, and the sensitivity was noticed to improve. Sensitivity thus is improved by decreasing $\alpha$, until such condition as the diameter of retroreflected energy at the surface begins to approach the size of the feature of interest (e.g. a protrusion).

FIGURE 3

Figure 3 illustrates another embodiment of the invention wherein a reretroreflective surface image is built up sequentially, using a smaller group of retroreflective elements moved in space.

If we consider the discussion relative to Figure 2 concerning the theory of operation we can see that concerning any one defect, the predominant area which contributes to illumination of the defect, is the area in the relative vicinity of the defect, and the corresponding effective zone of the screen. For a typical arrangement utilized to date for inspection of automotive panels, where the distances "R" and related retroreflection angles $\alpha$ are as discussed above, the rough area of the panel surface surrounding a small defect that is used at any one time to create the effect is let us say in the range of 50mm - 75mm in diameter with a corresponding projection of this surface onto to the screen.

Because of this, we can recreate the effect using a group of retroreflecting elements only large enough to effectively act on the light from the neighbouring effective areas of the surface (at any one time). For example, a 70mm diameter disk 300 shown in Figure 3 of retroreflective screen comprising a number of retroreflective elements, is placed on the movable manipulator device 320, and moved through the reflected light field of source 340 from surface 350, time sequentially recreating the image on the camera which can be either stored in memory and added digitally there, or alternatively added optically simply by using the integration properties of the camera (e.g. a CCD).

By using a larger group of retroreflective elements (e.g. as in the previous screen), one doesn't require a manipulator. Thus this sequential technique is generally more complex, slower and of less utility. However, it does have the advantage that it allows the use of a plurality of high cost retroreflective elements that would simply be prohibitively expensive if they were used in a screen, larger in the size of the test surface. This would be the case particularly when one is using infrared radiation where specialized infrared retroreflectors are utilized (glass beads are thought to be generally ineffective beyond 2 microns).

The second reason, also of use particularly the infrared is when one has to use a specialized light source such as a laser which tends to be cost effective only over a small area of illumination. Since the effect is localized to an area considerably larger than the defect but none the less relatively small relative to the surface of the panel, one can then also scan the light source (e.g. 370) having axis of illumination 371 by two axis mirror axis scanner 375, over the surface sequentially in unison with the scan of the retroreflector array. Precalculation, teaching, or servo control can be used to maintain the retroreflector array in the reflection field of the swept light beam.

A variant of Figure 3 replaces the group of retroreflective elements 300, with a small number or even a single large aperture retroreflective element which is purposely chosen to have a beam spread (e.g. = $\alpha$ 1/2 degree) such that it covers an area of the surface (e.g. circle 379) substantially larger than the defect 380 for example and further has an aperture width wide enough to collect the light coming in from slightly divergent angles, not only from a point source, but from any broader sources chosen. A suitable single element retroreflector in the Figure 3 example would be 3 inch diameter corner cube with say 0.1 - 0.5 degree divergence. Such a retroreflector would be much worse than the normal retroreflector of interest for other optical pursuits.

Finally, there is the possibility of using a "cloud" of individual retroreflective elements rather than elements fixed to a screen or manipulator for example. This may be the only way over very large surfaces, where an airplane could drop the elements as it passed over a surface or fluid (air, water) path whose gradient of shape or index of refraction was desired.

## FIGURE 4

Illustrated in Figure 4 is a novel method for assisting operators to utilize the invention. It is often desirable to take a test part and position it back where an original master part for example had been, with the master part retroreflection surface image digitally stored on a disk 405 for example, used as a reference.

In comparing the test image to the master either by eye or through the use of a computer program, one wishes where possible to have the lens magnification/the lens focal length, the lens aperture, light power, and the position of the part, all returned to the original situation used to obtain the master image for comparison.

It's noted that the master image in this case can be that of the same part taken at a different time or conversly a similar part known to be of high quality or what have you as a reference standard.

To do this the invention here comprises the alternate interlacing of image data from the master image to that of the instant image which causes a noticable flicker in the field where the two images do not correspond due to any of the variations mentioned above. As the variations are reduced a least flicker situation is obtained at which measurement is made.

To achieve this interlace, a frame grabber in processor 400 reads the master image from disk 405 and on alternate fields inserts the test image from camera 25 say.

Since there are a number of variables, there is a preferred way in which one goes about this. If the angle of incidence of the camera unit to the fixture is the same, we have found it preferable to:

1. Move the panel into rough location.

2. Adjust the camera zoom lens (if present) until the image appears to be the same size of that of the stored image.

3. Adjust the light power (easy to do due to a substantial flicker effect due to differing brightness levels of test and stored images).

4. Fine adjust the position of the panel to obtain the lens magnification. For example, in Figure 4, the test panel image 425 would be moved a distance "W" to correspond with the stored image 430.

Other methods to achieve this have been considered including the simple presentation of the whole field of each image at a high flicker frequency rather than interlace.

It is further noted in Figure 3 that the retroreflector group 300 can be square or other shapes beyond circular. Note too that the camera 360 can look at the whole surface simultaneously, or a camera such as 390 can be located (e.g. via beam splitter 391), so as to view a more limited area of the surface and swept together with the light source by mirror scanner or other sweeping means 375.

A novel construction of a single retroreflector of suitable dispersion, usable for ultra violet, infra-red as well as visible wavelengths, is shown in Figure 5. In one version, a simple corner cube is made with at least one of its sides having a suitable dispersive surface. it should be noted that by having orthonal sides of different dispersions can achieve different $\alpha$ in different directions which may be useful in producing retroreflection images either using a single or plurality of retroreflective elements.

Corner cube type retroreflector 500 is constructed with at least one of its three reflective faces 501 having dispersive characteristics. This is achieved in this example by having undulating form 505 or the use of myriads of individual small diffractive elements such as holes in aluminized side 506. It should be noted that these holes can be of a diameter on the order of the glass beads in screens used previously (e.g. 0.05 - .1 mm).

In the extreme, this retroreflector can be as large as the surface (or medium) to be imaged, thereby creating an alternate to the basic Figure 1 arrangement. Lines rather than holes can also be used to create suitable dispersion due to diffraction.

Light in this invention means all electromagnetic wavelengths capable of being reflected and retroreflected, e.g. soft X-ray to millimeter wave.

## Claims

1. A method of creating retroreflective images comprising the steps of:

Providing a group of retroreflecting elements,

Illuminating a surface so that a light field therefrom irradiates said group of elements, and

Moving said group of elements through at least a portion of said light field so as to reilluminate said surface at a multiplicity of sequential locations.

2. A method according to claim 1 wherein said light field is larger than said group of elements.

3. A method according to claim 2 wherein an axis of said illumination and said group of elements are moved in unison so as to sequentially illuminate and retroreflectively reilluminate the surface of interest.

4. A method according to claim 3 wherein a camera axis is moved in unison with said illumination axis.

5. A method of controlling sensitivity or other characteristics of retroreflection images comprising the step of selecting the angular distribution of retroreflected energy from retroreflective elements used in creation of said image to achieve the desired sensitivity or other characteristic.

6. A method according to claim 5 wherein said angular distribution is controlled by choice of wavelength of light used.

7. A method according to claim 5 wherein said distribution is controlled by size, type, or geometric distortion properties of said retroreflective elements.

8. A method for calibrating a retroreflection image producing system comprising the steps of producing said retroreflection image using a known test condition, changing the angular distribution or other characteristic of retroreflected light from a retroreflective member and comparing the change in said image to known changes in said retroflection characteristic to calibrate said system.

9. A method of calibrating a retroreflection image producing system comprising inserting a test surface, varying said test surface a known amount, and determining the change in said image as a function of said amount.

10. A method according to claim 1 wherein a single retroreflective element rather than a group is used.

11. A method according to claim 10, said single element having a beamspread more than 0.05 degree.

12. A method for aiding an operator in recreating a previous retroreflective imaging condition comprising the steps of: alternately displaying test and reference images, and adjusting position, optical, or other variables affecting a test image until the test and reference images appear similar.

13. A method for producing a form of retroreflection image, comprising the steps of

Illuminating a surface with divergent light

Retroreflecting light from said surface using a -single retroreflector element, said single element returning light arriving over a range of angles from said source via said surface.

14. A method according to claim 13 said element having the additional property that light from any small zone of said retroreflector diverges.

15. A method according to claim 14 wherein the divergence angle is greater than 0.1 degree in at least one plane.

16. A method according to claim 14 wherein said divergence is provided by a multiplicity of diffracting elements.

FIG. 1a

P_A

α

15

P_2

α

P_1

GAUSSIAN INTENSITY
PROFILE

D

P_B

α

R

12

25

21

10

20

γ

70

θ

11

To P_A

To P_B

θ

Fig. 1b

S_1

S_2

FIG. 1c

GAUSSIAN FROM
± 1/2° RETROREFLECTOR ELEMENT

0.5°

GAUSSIAN FROM ± 0.25° ELEMENT

1°

EP 0 455 857 A1

FIG. 2

FIG. 3

## FIG. 4

## FIG. 5a

## FIG. 5b

## FIG. 5c

European Patent
Office

**EUROPEAN SEARCH REPORT**

Application Number

EP 90 10 8857

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 700 629 (SIRA LTD) <br> * Figures 2,8; page 8, lines 9-31; page 10, line 15 - page 11, line 25 * <br> --- | 1 | G 01 N 21/89 |
| A | WO-A-8 605 588 (DIFFRACTO LTD) <br> * Page 36, paragraph 2 - page 37, paragraph 2 * <br> ----- | 1 | |

|  |  |  | TECHNICAL FIELDS SEARCHED (Int. Cl.5) |
|---|---|---|---|
|  |  |  | G 01 N <br> G 01 B |

~~The present search report has been drawn up for all claims~~

| Place of search | Date of completion of the search | Examiner |
|---|---|---|
| THE HAGUE | 10-01-1991 | ZINNGREBE U. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

---

## ☒ LACK OF UNITY OF INVENTION

The Search Division considers that the present European patent application does not comply with the requirement of unity of invention and relates to several inventions or groups of inventions,
namely:

1. Claims 1-4,10-11:  Method of scanning a surface with retroreflector.

2. Claims 5-7: Method of sensitity control by selection of angular distribution of light from retroreflector.

3. Claims 8,9,12: Method of calibration of retroreflection image.

4. Claims 13-16: Method of producing retroreflctive image with divergent light and single retroreflector.

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims:   1-4,10-11